# EUROPEAN PATENT APPLICATION

(11) **EP 3 012 058 A1**
(43) Date of publication of application: **27.04.2016**
(21) Application number: 14813408.3
(22) Date of filing: 16.06.2014
(51) Int. Cl.: B23K 9/073, B23K 9/32

(54) **WATER-COOLED SINGLE WELDING MACHINE MODULE AND WATER-COOLED WELDING MACHINE**

(30) Priority: 17.06.2013 KR 20130068779
(71) Applicant: Daewoo Shipbuilding & Marine Engineering Co., Ltd., Seoul 100-180 (KR)
(72) Inventor: LEE, Weon Gu, Geoje-si Gyeongsangnam-do 656-938 (KR); AHN, Woo Young, Geoje-si Gyeongsangnam-do 656-080 (KR); KIM, Young Joo, Geoje-si Gyeongsangnam-do 656-130 (KR); CHO, Bang Hyun, Busan 607-785 (KR)
(74) Representative: Ipside
(86) International application number: PCT/KR2014/005257
(87) International publication number: WO 2014/204155

(57) **Abstract**

The present invention relates to an inverter type water-cooled single welding machine module. In the development of a module welding machine containing a plurality of inverter welding machines embedded inside one case, as a part of measures to reduce size and lighten the weight of each individual welding machine, the present invention replaces the conventional air-cooled method using fans with a water-cooled method of which the cooling efficiency is excellent. Thus, it is possible to manufacture the individual welding machines to be smaller and lighter by drastically reducing the size of the individual welding machines (in the order of 1/3 to 1/5) due to effects of decreasing the number of heat dissipation components to be used and reducing the capacity and size thereof through enhancement of the efficiency of the heat dissipation components.

## Description

### [Technical Field]

The present invention relates to a welding machine, and more particularly, to a water-cooled single welding machine module and a water-cooled welding machine that are capable of providing excellent cooling efficiencies, thus achieving reduction of size and lightness thereof.

### [Background Art]

In conventional practice, an air-cooled welding machine using fans is configured to accommodate components into a single casing. After manufactured, generally, SCR type welding machines have a weight of 170 to 200 kg and a size of 500 mm(W) x 684 mm (D) x 845 mm(H), so that they are relatively heavy and bulky. Contrarily, inverter type welding machines have different weights and sizes from each other since the sizes of transformers are varied in accordance with the frequencies used. In this case, the inverter type welding machines generally have a weight of about 100 kg at a frequency of 20 KHz and about 50 kg at a frequency of 70 to 100 KHz and a size of 400 mm(W) x 630 mm (D) x 480 mm(H), so that they are lightweight.

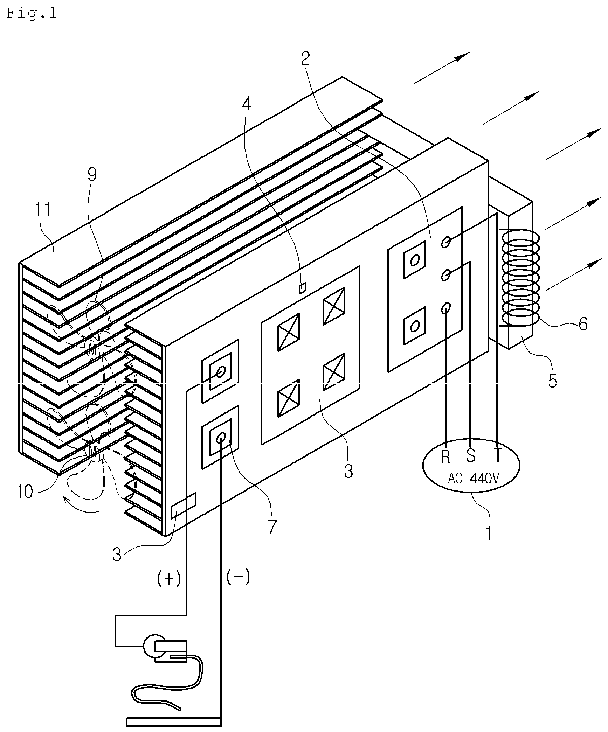

However, if it is desired to make a modular welding machine in which a plurality of lightweight inverter type welding machines is embedded, the modular welding machine should be smaller in size and lighter in weight so that the individual inverter type welding machines can be detachably mounted and handled by means of one worker. As shown in FIG.1 showing a conventional air-cooled inverter type welding machine, however, the sizes of heat-radiating plates 11 correspond to 70% or more of the whole size of the welding machine, and accordingly, there is a need to miniaturize the sizes of the heat-radiating plates 11. A reference numeral 1 indicates main input power, 2 indicates an input diode, 3 indicates an IGBT PCT, 4 indicates an IGBT element, 5 indicates a transformer core, 6 indicates a wound coil, 7 indicates an output diode, 8 indicates a current sensor, 9 indicates a cooling fan, and 10 indicates a fan motor.

As one of conventional technologies related to the welding machine, on the other hand, there is proposed an automatic pipe welding system including: a body part having a clamp for centering and fixing an object by size, a driver for performing single-axis servo control of an AC servo reduction motor, a frame for erecting the object and welding the object, and a jig and fixture for setting the object by size; a welding part having an inverter pulse type TIG welding machine, as a water-cooled cooling device, having an output of 300 A mounted on the body part; a controller for controlling welding conditions of the welding part by PLC to arbitrarily vary the welding conditions; and utility and attachment having a pneumatic and shielding gas supply device adapted to supply gas having appropriate pressure to the welding part (See Korean Patent Laid-Open Application No.2003-0073455).

### [Disclosure]

### [Technical Problem]

Accordingly, the present invention has been made in view of the above-mentioned problems occurring in the prior art, and it is an object of the present invention to provide a water-cooled single welding machine module and a water-cooled welding machine that are capable of achieving reduction of size and lightness so that they can be applied to a modular welding machine configured to have a plurality of individual welding machine modules performing a plurality of welding operations to allow components for constituting each individual welding machine module to be modularized into groups in such a manner as to be located on a single panel.

### [Technical Solution]

To accomplish the above-mentioned object, according to a first aspect of the present invention, there is provided a water-cooled single welding machine module including a water-cooled cooling plate adapted to cool heat-generating components.

According to the present invention, desirably, the cooling plate includes an input diode, an IGBT PCB, a water-cooled transformer, output diodes and a current sensor, as components of the water-cooled single welding machine module, sequentially disposed thereon.

According to the present invention, desirably, the cooling plate further includes a cooling plate temperature sensor disposed thereon so as to sense a temperature of the cooling plate.

According to the present invention, desirably, the cooling plate includes a cooling water passage formed along the intermediate portion in the interior thereof.

According to the present invention, desirably, the cooling plate includes the input diode, the IGBT PCB, the water-cooled transformer, the output diodes, the current sensor, and the cooling plate temperature sensor, as components of the water-cooled single welding machine module, distributedly arranged on both side surfaces thereof.

To accomplish the above-mentioned object, according to a second aspect of the present invention, there is provided a water-cooled welding machine including: the water-cooled single welding machine module according to the first aspect of the present invention; a controller for controlling the water-cooled single welding machine module; a manipulation panel for manipulating the water-cooled single welding machine module; an output terminal and a control terminal for connecting a wire feeder and a torch; a connector for connecting the water-cooled single welding machine module with external devices; and an exterior input power device.

### [Advantageous Effects]

According to the present invention, when the water-cooled single welding machine module and the water-cooled welding machine are applied to a modular welding machine in which a plurality of inverter type welding machines is embedded in a single casing, the air-cooled way using fans in the conventional practice is replaced by the water-cooled way providing excellent cooling efficiencies, thus achieving the reduction of size and lightness of the individual welding machine. Further, the efficiencies of heat-generating components are increased to reduce the number of welding machines used and the capacities and sizes of the welding machines used, so that the size of each individual welding machine can be substantially reduced to about 1/3 to 1/5, thus providing a small and lightweight welding machine.

Further, a high efficiency and low cost modular welding machine can be provided through water cooling effects, thus achieving the reduction of welding power energy by 20%, the improvement of welding quality according to excellent welding properties, and the decrement in loss of work (for example, work delay due to the blocking of tip by welding start fault, the quantity of tip consumed, and wire loss). Furthermore, the welding machine can be located near a workplace to reduce the length of a welding cable, thus achieving saving in manufacturing cost thereof.

### [Description of Drawings]

FIG.1 is a perspective view showing a conventional air-cooled inverter type welding machine.
FIG.2 is a plan view showing a water-cooled single welding machine module according to a first embodiment of the present invention.
FIG.3 is a sectional view showing the water-cooled single welding machine module according to the first embodiment of the present invention.
FIG.4 is a plan view showing a water-cooled single welding machine module according to a second embodiment of the present invention.
FIG.5 is a sectional view showing the water-cooled single welding machine module according to the second embodiment of the present invention.
FIG.6 is a bottom view showing the water-cooled single welding machine module according to the second embodiment of the present invention.
FIG.7 is a perspective view showing a water-cooled welding machine according to the present invention.

### [Mode for Invention]

Hereinafter, the technological configurations of a water-cooled single welding machine module and a water-cooled welding machine according to the present invention will be in detail described with reference to drawings. If it is determined that the detailed explanation on the well known technology related to the present invention makes the scope of the present invention not clear, the explanation will be avoided for the brevity of the description.

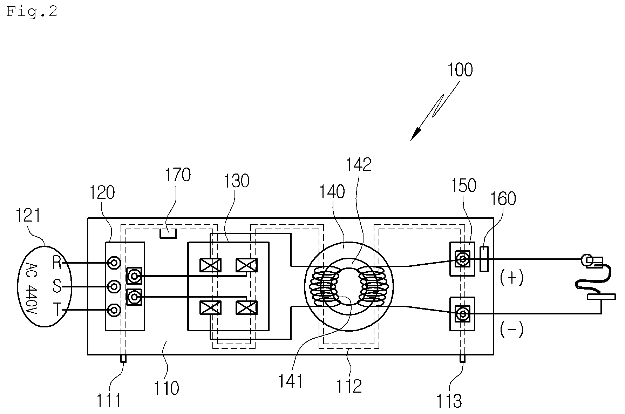

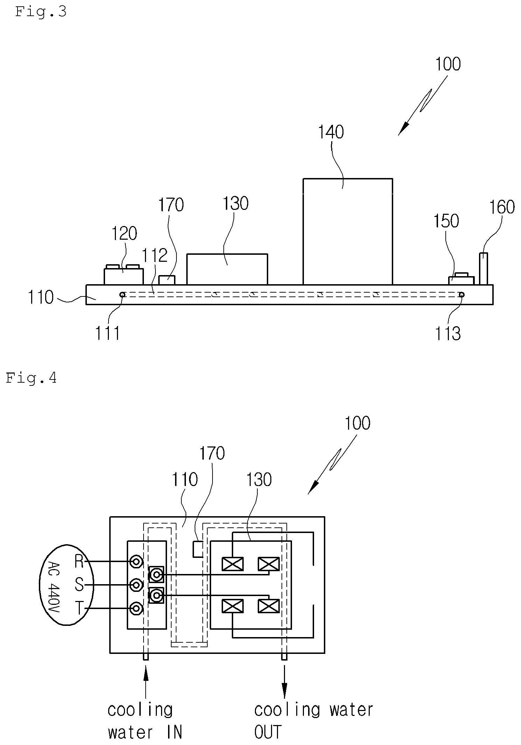

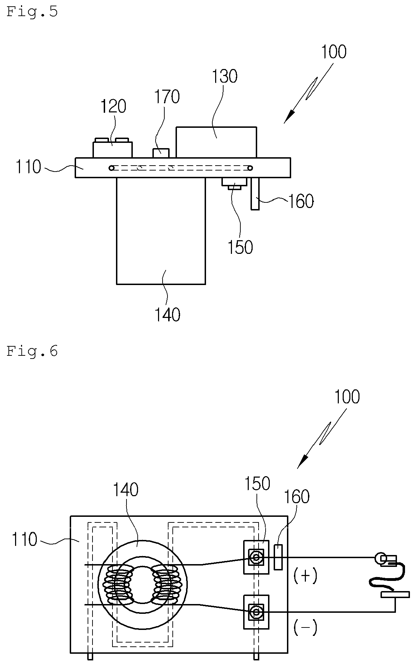

FIG.2 is a plan view showing a water-cooled single welding machine module according to a first embodiment of the present invention, FIG.3 is a sectional view showing the water-cooled single welding machine module according to the first embodiment of the present invention, FIG.4 is a plan view showing a water-cooled single welding machine module according to a second embodiment of the present invention, FIG.5 is a sectional view showing the water-cooled single welding machine module according to the second embodiment of the present invention, and FIG.6 is a bottom view showing the water-cooled single welding machine module according to the second embodiment of the present invention.

According to the present invention, a water-cooled single welding machine module 100 is reduced in size and weight so that it can be applied to a modular welding machine configured to have a plurality of individual welding machine modules performing a plurality of welding operations at the same time to allow components for constituting each individual welding machine module to be modularized into groups in such a manner as to be located on a single panel.

As shown in FIGS.2 and 3, the water-cooled single welding machine module 100 has a water-cooled cooling plate 110 adapted to cool heat-generating components. That is, the formation of the water-cooled cooling plate 110 enables the air-cooled way using fans in the conventional practice to be replaced by the water-cooled way providing excellent cooling efficiencies, thus achieving the reduction of size and lightness of the welding machine.

At this time, desirably, the cooling plate 110 includes an input diode 120, an IGBT PCB 130, a water-cooled transformer 140, output diodes 150 and a current sensor 126, as components of the water-cooled single welding machine module 100, sequentially disposed thereon. That is, the components are disposed in the order of power control on the cooling plate 110 so as to reduce the length of connection cables between the neighboring components. Further, the cooling plate 110 further includes a cooling plate temperature sensor 170 disposed near the IGBT PCB 130 so as to sense a temperature of the cooling plate 110.

For your reference, a reference numeral 111 indicates a cooling water inlet, 113 indicates a cooling water outlet, 141 indicates a wound coil, and 142 indicates a transformer core.

As shown in FIGS.4 to 6, on the other hand, a cooling water passage 112 may be formed along the intermediate portion in the interior of the cooling plate 110, so that the cooling plate 110 includes the input diode 120, the IGBT PCB 130, the water-cooled transformer 140, the output diodes 150, the current sensor 160, and the cooling plate temperature sensor 170, as components of the water-cooled single welding machine module 100, appropriately distributedly arranged thereon, thus substantially reducing the size of the welding machine module.

For example, the input diode 120, the IGBT PCB 130 and the cooling plate temperature sensor 170 are disposed on top of the cooling plate 110, and the water-cooled transformer 140, the output diode 150 and the current sensor 160 on the underside of the cooling plate 110.

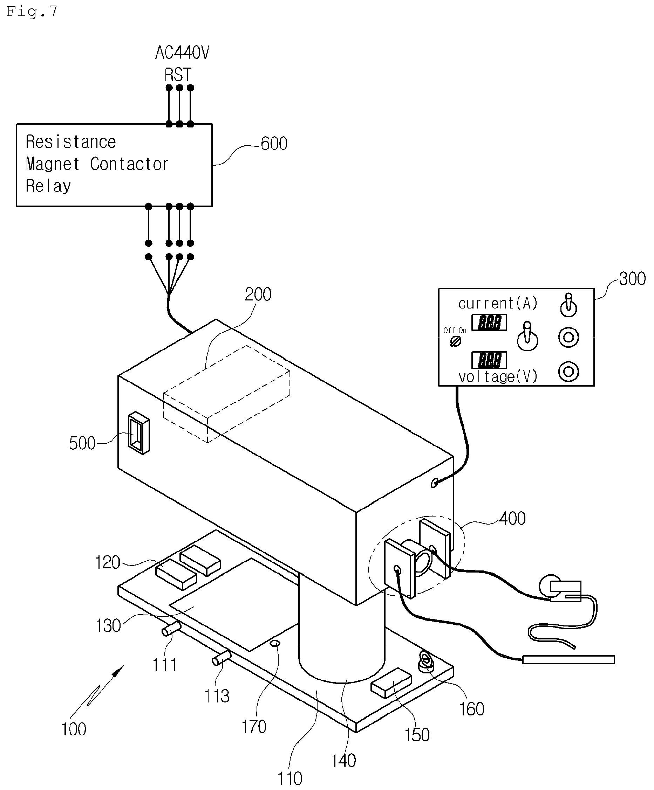

FIG.7 is a perspective view showing a water-cooled welding machine according to the present invention.

According to the present invention, the water-cooled welding machine includes the water-cooled single welding machine module 100, a controller 200 for controlling the water-cooled single welding machine module 100, a manipulation panel 300 for manipulating the water-cooled single welding machine module 100, an output terminal and a control terminal for connecting a wire feeder and a torch, a connector 500 for connecting the water-cooled single welding machine module 100 with external devices, and an exterior input power device 600.

The manipulation panel 300 includes current/voltage displays, and crater existence/non-existence, crater current/voltage regulating volume and wire selection switches.

The connector 500 includes a control power terminal, a communication terminal with a central controller, a solenoid valve power terminal for shielding gas, and an exterior relay power terminal.

As mentioned above, if the water-cooled single welding machine module and the water-cooled welding machine are applied to a modular welding machine in which a plurality of inverter type welding machines is embedded in a single casing, the air-cooled way using fans in the conventional practice is replaced by the water-cooled way providing excellent cooling efficiencies, thus achieving the reduction of size and lightness of the individual welding machine. Further, the efficiencies of heat-generating components are increased to reduce the number of welding machines used and the capacities and sizes of the welding machines used, so that the size of each individual welding machine can be substantially reduced to about 1/3 to 1/5, thus providing a small and lightweight welding machine.

Further, a high efficiency and low cost modular welding machine can be provided through the water cooling effects, thus achieving the reduction of welding power energy by 20%, the improvement of welding quality according to excellent welding properties, and the decrement in loss of work (for example, work delay due to the blocking of tip by welding start fault, the quantity of tip consumed, and wire loss). Furthermore, the welding machine can be located near a workplace to reduce the length of a welding cable, thus achieving saving in manufacturing cost thereof.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

The foregoing description of the embodiments of the invention has been presented for the purpose of illustration, and thus, it is not intended to be exhaustive or to limit the invention to the precise forms disclosed. Persons skilled in the relevant art can appreciate that many modifications and variations are possible in light of the above teachings. It is therefore intended that the scope of the invention be limited not by this detailed description, but rather by the claims appended hereto.

## Claims

1. A water-cooled single welding machine module 100 comprising a water-cooled cooling plate 110 adapted to cool heat-generating components.

2. The water-cooled single welding machine module according to claim 1, wherein the cooling plate 110 comprises an input diode 120, an IGBT PCB 130, a water-cooled transformer 140, output diodes 150 and a current sensor 160, as components of the water-cooled single welding machine module 100, sequentially disposed thereon.

3. The water-cooled single welding machine module according to claim 2, wherein the cooling plate 110 further comprises a cooling plate temperature sensor 170 disposed thereon so as to sense a temperature of the cooling plate 110.

4. The water-cooled single welding machine module according to claim 1, wherein the cooling plate 110 comprises a cooling water passage 112 formed along the intermediate portion in the interior thereof.

5. The water-cooled single welding machine module according to claim 4, wherein the cooling plate 110 comprises the input diode 120, the IGBT PCB 130, the water-cooled transformer 140, the output diodes 150, the current sensor 160, and the cooling plate temperature sensor 170, as components of the water-cooled single welding machine module 100, distributedly arranged on both side surfaces thereof.

6. A water-cooled welding machine comprising:
- the water-cooled single welding machine module 100 according to any one of claims 1 to 5;
- a controller 200 for controlling the water-cooled single welding machine module 100;
- a manipulation panel 300 for manipulating the water-cooled single welding machine module 100;
- an output terminal and a control terminal 400 for connecting a wire feeder and a torch;
- a connector 500 for connecting the water-cooled single welding machine module 100 with external devices; and
- an exterior input power device 600.
